# EUROPEAN PATENT APPLICATION

(11) **EP 4 571 950 A1**
(43) Date of publication of application: **18.06.2025**
(21) Application number: 24195720.8
(22) Date of filing: 21.08.2024
(51) Int. Cl.: H01M 50/103, H01M 50/176, H01M 50/548, H01M 50/553, H01M 50/557, H01M 50/562, H01M 50/564

(54) **SECONDARY BATTERY**

(30) Priority: 14.12.2023 KR 20230182450
(71) Applicant: SAMSUNG SDI CO., LTD., Giheung-gu Yongin-si, Gyeonggi-do 17084 (KR)
(72) Inventor: LEE, Hyun Soo, Yongin-Si, Gyeonggi-do 17084 (KR)
(74) Representative: Marks & Clerk LLP

(57) **Abstract**

A secondary battery includes an electrode assembly, a case including a first surface that is opened, the case being configured to accommodate the electrode assembly, a first cap plate covering the first surface, a first terminal electrically connected to a first electrode tab of the electrode assembly and configured to penetrate the first cap plate, the first terminal including a first terminal plate and a first set of protrusions that are integrally formed, and a second terminal electrically connected with a second electrode tab of the electrode assembly.

## Description

### BACKGROUND

### 1. FIELD

Aspects of embodiments of the present disclosure relate to a secondary battery.

### 2. DESCRIPTION OF THE RELATED ART

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

In the secondary battery, heat can be generated due to various factors such as electrolyte reactions as well as during charging and discharging. Excessive heat in the secondary battery can lead to ignition or explosion, so it is desired to reduce or minimize the heat generation in the secondary battery or quickly dissipate the generated heat to suppress excessive temperature rise of the secondary battery. Additionally, the secondary battery exhibits volume changes, expanding and contracting, depending on external conditions and charge-discharge states. Therefore, it is desirable to design the secondary battery that can ensure stability even with such volume changes.

The above information disclosed in this Background section is for enhancement of understanding of the background of the present disclosure, and therefore, it may contain information that does not constitute related (or prior) art.

### SUMMARY

In view of the above, some embodiments of the present disclosure are directed to a secondary battery including a terminal in which a terminal plate and protrusions are integrally formed to connect the terminal with an electrode tab of an electrode assembly.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

According to some embodiments of the present disclosure there is provided a secondary battery including: an electrode assembly; a case including a first surface that is opened, the case being configured to accommodate the electrode assembly; a first cap plate covering the first surface; a first terminal electrically connected to a first electrode tab of the electrode assembly and configured to penetrate the first cap plate, the first terminal including a first terminal plate and a first set of protrusions that are integrally formed; and a second terminal electrically connected with a second electrode tab of the electrode assembly.

In some embodiments, the secondary battery may further include a first current collector electrically connecting the first electrode tab with the first terminal, wherein the first set of protrusions may be secured by allowing the first set of protrusions to penetrate the first cap plate and the first current collector.

In some embodiments, the first current collector, the first terminal plate, and the first set of protrusions may be formed of a same material.

In some embodiments, the same material may be aluminium.

In some embodiments, a gasket may be between the first terminal plate and the first current collector to seal a hollow portion of the first cap plate through which the first set of protrusions passes.

In some embodiments, an upper insulator may be between the first terminal plate and the first cap plate.

In some embodiments, the first set of protrusions may be formed to extend from the first terminal plate.

In some embodiments, the protrusions of the first set of protrusions may be formed along a long side of the first terminal plate.

In some embodiments, the case may include a second surface that is opened and is opposite to the first surface, the secondary battery may further include a second cap plate covering the second surface, the second terminal may penetrate the second cap plate, and a length of a long side of the first terminal plate may be equal to or greater than half of a length of a long side of the first cap plate.

In some embodiments, a length of a short side of the first terminal plate may be equal to or greater than half of a length of a short side of the first cap plate.

In some embodiments, each protrusion of the first set of protrusions may include: a first sub-protrusion having a first cross-sectional area and formed to extend from the first terminal plate; and a second sub-protrusion having a second cross-sectional area and formed to extend from the first sub-protrusion, and wherein the first cross-sectional area may be greater than the second cross-sectional area.

In some embodiments, the secondary battery may further include: a first current collector electrically connecting the first electrode tab with the first terminal, wherein the first sub-protrusion may penetrate the first cap plate, and the second sub-protrusion may penetrate the first current collector.

In some embodiments, the secondary battery may further include: a first current collector electrically connecting the first electrode tab with the first terminal, wherein the second cross-sectional area may be defined such that a shortest distance between a long side of the first current collector and the second sub-protrusion is equal to or greater than a minimum welding width.

In some embodiments, the secondary battery may further include: a first current collector electrically connecting the first electrode tab with the first terminal, wherein an insulator may be between the first cap plate and the first current collector, and the first sub-protrusion may penetrate the insulator.

In some embodiments, the case may include a second surface that is opened and is opposite to the first surface, the secondary battery may further include: a second cap plate covering the second surface; and a second current collector electrically connecting the second electrode tab with the second terminal, the second terminal may penetrate the second cap plate, the second terminal may include a second terminal plate, a third terminal plate in surface contact with the second terminal plate, and a second set of protrusions, the third terminal plate and the second set of protrusions may be integrally formed, and the second set of protrusions may be secured by allowing the second set of protrusions penetrate the second cap plate and the second current collector.

In some embodiments, the second terminal plate and the third terminal plate may be formed of different materials, the third terminal plate and the second set of protrusions may be formed of a same material, and the second set of protrusions and the second current collector may be formed of a same material.

In some embodiments, the second terminal plate may be formed of aluminium, and the third terminal plate, the second set of protrusions, and the second current collector may be formed of copper.

In some embodiments, the second terminal plate and the third terminal plate may be joined together by diffusion welding or cladding welding.

In some embodiments, the case may further include: a first long side wall portion and a second long side wall portion that are opposite to each other and are spaced apart from each other; and a first short side wall portion and a second short side wall portion that are opposite to each other and are spaced apart from each other, an area of each of the first short side wall portion and the second short side wall portion being smaller than an area of each of the first long side wall portion and the second long side wall portion.

In some embodiments, the secondary battery may further include: a second current collector electrically connecting the second electrode tab and the second terminal, wherein the second terminal may penetrate the first cap plate, wherein the second terminal may include a second terminal plate, a third terminal plate in surface contact with the second terminal plate, and a second set of protrusions, wherein the third terminal plate and the second set of protrusions may be integrally formed, and wherein the second set of protrusions may be secured by allowing the second set of protrusions penetrate the first cap plate and the second current collector.

At least some of the above and other features of the invention are set out in the claims.

According to some embodiments of the present disclosure, terminals are provided at opposite side-surfaces of the case, and a vent unit is provided at the bottom of the case. Therefore, space is efficiently utilized.

According to some embodiments of the present disclosure, the increased volume of the terminals improves (e.g., increases) heat dissipation, and the increased welding area of the busbar of the secondary battery module can reduce heat generation.

According to some embodiments of the present disclosure, the set of protrusions is formed to extend from the terminal plate. Therefore, material costs can be reduced by eliminating the need to separately provide the terminals and fixing members for fixing the terminals.

According to some embodiments of the present disclosure, a plurality of protrusions are used to fix the terminals. Therefore, the torque strength of the terminals is improved (e.g., increased) to prevent the terminals from bending or substantially reduce bending thereof during use of the secondary battery.

According to some embodiments of the present disclosure, the cross-sectional areas of the protrusions that penetrate the current collector are adjusted. Therefore, the reduced or minimum welding width of the current collector can be ensured while the degree of improvement (e.g., increase) in the torque strength of the terminals obtained by the protrusions is maintained.

According to some embodiments of the present disclosure, the first terminal and the second terminal are formed at opposite side-surfaces of the secondary battery, and the vent unit is formed at the surface (e.g., the bottom surface) where the terminals are not formed. Therefore, the secondary battery module is configured with improved (e.g., increased) insulation performance and space efficiency while allowing the gas discharged through the vent unit to be smoothly discharged from the bottom surface of the secondary battery where the terminals are not formed.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a perspective view of a secondary battery according to some embodiments of the present disclosure;
FIG. 2 illustrates a perspective view of a case according to some embodiments of the present disclosure;
FIG. 3 illustrates a cross-sectional view of a secondary battery according to some embodiments of the present disclosure;
FIG. 4 illustrates a cross-sectional view illustrating one side-surface of a secondary battery at which a first terminal is disposed according to some embodiments of the present disclosure;
FIG. 5 illustrates a cross-sectional view illustrating one side-surface of a secondary battery at which a first terminal having a two-stepped structure is positioned according to some embodiments of the present disclosure;
FIG. 6 illustrates a cross-sectional view illustrating a current collector according to some embodiments of the present disclosure;
FIG. 7 illustrates a cross-sectional view illustrating one side-surface of a secondary battery at which a second terminal is disposed according to some embodiments of the present disclosure;
FIG. 8 illustrates a cross-sectional view illustrating one side-surface of a secondary battery at which a second terminal having a two-stepped structure is disposed according to some embodiments of the present disclosure;
FIG. 9 illustrates a perspective view of a secondary battery having first and second terminals and that are formed at one surface thereof according to some embodiments of the present disclosure;
FIG. 10 illustrates a cross-sectional view illustrating one surface of a secondary battery having a first terminal and a second terminal according to some embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical aspects and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

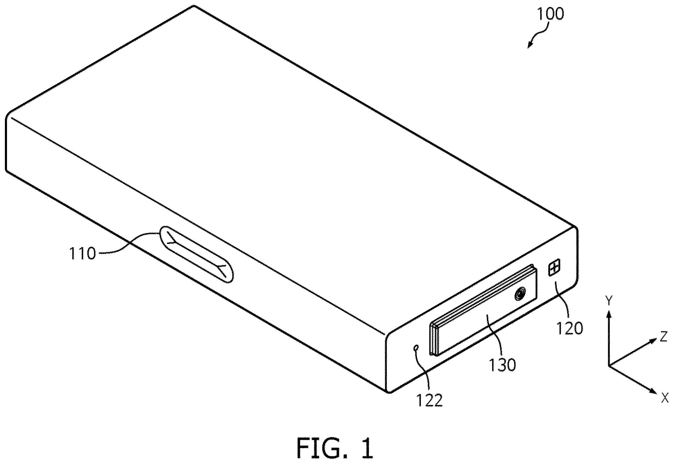

FIG. 1 is a perspective view of a secondary battery 100 according to some embodiments of the present disclosure. The secondary battery 100 may include an electrode assembly, a case accommodating the electrode assembly, a first cap plate 120, a second cap plate opposite to the first cap plate 120, a first terminal 130, and a second terminal.

As shown in FIG. 1, the vent unit 110 may be formed at one surface of the case. For example, the vent unit 110 may be formed at a bottom surface of the case. Here, the bottom surface may refer to a surface facing downward when the secondary battery is installed.

In some embodiments, the case of the secondary battery may accommodate the electrode assembly with an electrolyte solution therein. For example, the case may be formed with an opened first surface and an opened second surface opposite to the opened first surface, and the electrode assembly may be accommodated in the case. Here, the opened surface and the opened side-surface may refer to a surface with an opening (that is, the entire surface that is opened). The first cap plate 120 may cover the opened first surface of the case, and the second cap plate may cover the opened second surface of the case. In addition, an injection port 122 may be formed at the first cap plate 120, and the electrolyte solution may be injected into the case through the injection port 122. FIG. 1 shows that the injection port 122 is formed at the first cap plate 120, but the scope of the present disclosure is not limited thereto. After the electrolyte injection is completed, the injection port 122 may be sealed using a sealing member such as a stopper or the like.

The first cap plate 120 may have a first terminal 130 that is electrically connected to a first electrode tab of the electrode assembly and penetrates the first cap plate 120. Similarly, the second cap plate may have a second terminal that is electrically connected to a second electrode tab of the electrode assembly and penetrates the second cap plate. In FIG. 1, it is illustrated that the first terminal 130 is a positive terminal and the second terminal is a negative terminal. A positive terminal indication (+) may be formed on the first cap plate 120 by engraving or the like. Similarly, a negative terminal indication (-) may be formed on the second cap plate by engraving or the like.

In some embodiments, a length of a long side of the first terminal 130 and a length of a long side of the second terminal may be equal to or greater than half of a length of a long side of the first cap plate 120 and half of a length of a long side of the second cap plate, respectively. In some examples, a length of a short side of the first terminal 130 and a length of a short side of the second terminal may be equal to or greater than half of a length of a short side of the first cap plate 120 and half of a length of a short side of the second cap plate, respectively. This allows for improved (e.g., increased) heat dissipation due to the increased volume of the terminals as well as reduced heat generation due to the increased welding area of the busbar of the secondary battery module.

In some embodiments, a vent unit 110 may be formed at one surface (e.g., a bottom surface) of the case. The vent unit 110 may be configured to be opened in response to a case where an internal pressure of the secondary battery 100 exceeds a set or predetermined threshold pressure. In such examples, the threshold pressure may be set differently depending on the applications, materials, purpose, and the like of the secondary battery 100. For example, a relatively high threshold pressure may be set for a secondary battery in which the internal pressure of the case is maintained at a higher pressure on average compared to other applications due to short charge-discharge cycles during use. In other examples, a relatively high threshold pressure may be set for a secondary battery that is manufactured with a material and/or design that has relatively high heat and/or pressure resistance. In contrast, a relatively low threshold pressure may be set for a secondary battery manufactured with a material and/or design that has relatively low heat and/or pressure resistance. In some examples, the vent unit 110 may be configured to be opened in response to a case where an internal temperature exceeds a set or predetermined threshold temperature. With such a configuration, the vent unit 110 may prevent or substantially reduce likelihood of an explosion of the secondary battery 100 and/or prevent or substantially reduce likelihood of a cascading exothermic reaction of secondary batteries arranged adjacent to the secondary battery 100.

FIG. 1 shows a single vent unit 110 formed at a central portion of one surface (e.g., the bottom surface) of the case. However, the number of the vent units is not limited thereto, and any number of vent units may be formed at arbitrary positions on one surface (e.g., the bottom surface) of the case. For example, two or more vent units may be formed at one surface of the case.

In FIG. 1, it is illustrated that the secondary battery is a prismatic battery cell having a rectangular parallelepiped shape, but the scope of the present disclosure is not limited thereto. For example, instead of a hexahedral shape, the secondary battery 100 may have various suitable shapes such as a polyhedral shape, a cylindrical shape, and the like.

As described above, the first terminal 130 and the second terminal are formed at opposite surfaces of the secondary battery 100, and the vent unit 110 is formed at the surface (e.g., the bottom surface) where the terminals are not formed. With such a configuration, the secondary battery module may be configured with improved (e.g., increased) insulation performance and space efficiency while allowing the gas discharged through the vent unit 110 to be smoothly discharged from the bottom surface of the secondary battery 100 where the terminals are not formed.

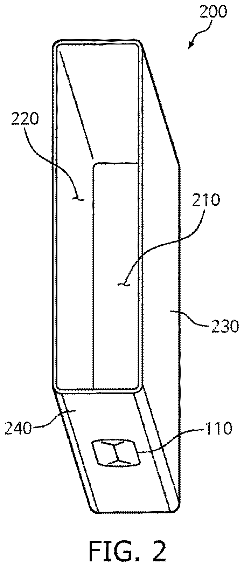

FIG. 2 is a perspective view of a case 200 according to some embodiments of the present disclosure. As shown in FIG. 2, the case 200 may be formed with two opened side-surfaces that are opposite to each other. For example, the case 200 may include an opened first side-surface 210 and an opened second side-surface 220 that is opposite to the opened first side-surface 210. The case 200 may be formed of a conductive metal, such as aluminium, an aluminium alloy, nickel-plated steel, or the like. An electrode assembly may be accommodated within the case 200, a first cap plate may cover the opened first side-surface 210 of the case 200, and a second cap plate may cover the opened second side-surface 220 of the case 200.

In some embodiments, the case 200 may be a rectangular parallelepiped with two opposite side-surfaces being opened. In such examples, the case 200 may include a first long-side wall portion 230 and a second long-side wall portion opposite to each other while being spaced apart from each other, and a first short-side wall portion 240 and a second short-side wall portion opposite to each other while being spaced apart from each other. Here, the areas of the first short-side wall portion and the second short-side wall portion 240 may be smaller than the areas of the first long-side wall portion 230 and the second long-side wall portion, respectively.

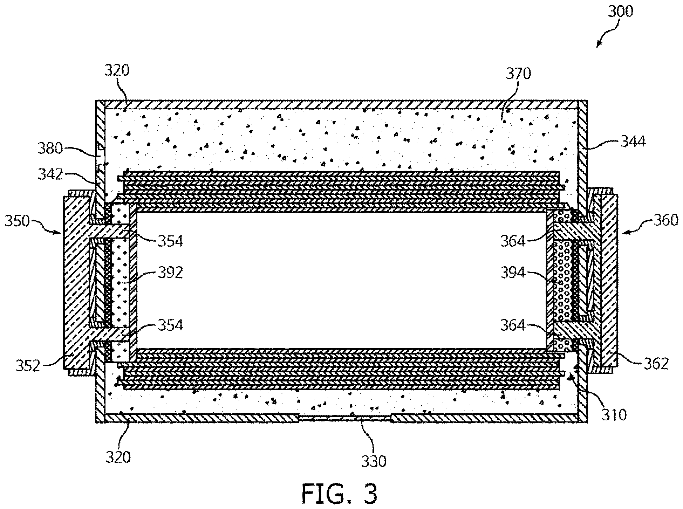

FIG. 3 is a cross-sectional view of a secondary battery 300 according to some embodiments of the present disclosure. As shown in FIG. 3, the secondary battery 300 may include an electrode assembly 310, a case 320, a vent unit 330, cap plates 342 and 344, terminals 350 and 360, and an electrolyte solution 370. The case 320 may form the overall outer appearance of the secondary battery 300 and may include (e.g., be made of) a conductive metal, such as aluminium, aluminium alloy, nickel-plated steel, or the like. In addition, the case 320 may provide a space in which the electrode assembly 310 is accommodated.

The electrode assembly 310 may be accommodated together with the electrolyte solution 370 inside the case 320. The electrode assembly 310 may include a positive electrode, a negative electrode, and a separator. For example, the electrode assembly 310 may have a structure in which the positive electrode and the negative electrode are wound after interposing the separator, which is an insulator, therebetween. Each of the positive electrode and the negative electrode may include a current collector including (e.g., made of) a thin metal foil having a coated portion on which an active material is coated and an uncoated portion on which an active material is not coated. However, the present disclosure is not limited thereto, and the electrode assembly 310 may have a structure in which a positive electrode and a negative electrode, each including (e.g., made of) a plurality of sheets, are alternately stacked with a separator interposed therebetween.

The vent unit 330 may be formed at one surface (e.g., the bottom surface) of the case 320 and may be opened to release gas when desired.

A first cap plate 342 and a second cap plate 344 may respectively cover two opened side-surfaces of the case 320 that are opposite to each other. The first cap plate 342 may have a first terminal (e.g., a first electrode terminal) 350 that is electrically connected to a first electrode tab of the electrode assembly 310 and penetrates the first cap plate 342. Similarly, the second cap plate 344 may have a second terminal (e.g., a second electrode terminal) 360 that is electrically connected to a second electrode tab of the electrode assembly 310 and penetrates the second cap plate 344.

For example, the terminals 350 and 360 may respectively be in contact with current collectors 392 and 394 that are electrically connected to the electrode assembly 310 within the case 320, so that each of the terminals 350 and 360 can be electrically connected to the electrode assembly 310. For example, the first terminal 350 may include a first terminal plate 352 and a first set of protrusions 354, and the first set of protrusions 354 is secured by allowing the protrusions 354 to extend through the first cap plate 342 and the first current collector 392. Similarly, the second terminal 360 includes a second terminal plate 362 and a second set of protrusions 364, and the second set of protrusions 364 may be secured by allowing the protrusions 364 to extend through the second cap plate 344 and the second current collector 394.

One of the first terminal 350 and the second terminal 360 may be a positive terminal and the other may be a negative terminal. For example, the first terminal 350 may be the positive terminal and the second terminal 360 may be the negative terminal.

An injection port 380 may be formed at the first cap plate 342. The electrolyte solution 370 may be injected into the case 320 through the injection port 380. Additionally, after the electrolyte solution 370 is injected, a sealing stopper may be fitted and installed into the injection port 380 to prevent or substantially reduce leakage of the electrolyte solution 370.

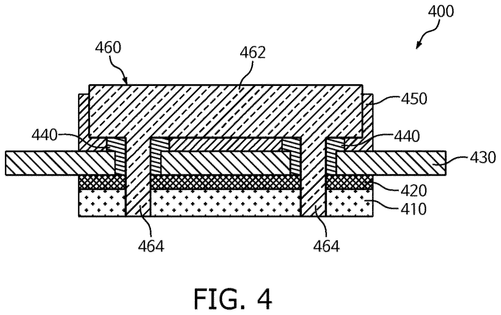

FIG. 4 is a cross-sectional view illustrating one side-surface 400 of a secondary battery at which a first terminal 460 is disposed according to some embodiments of the present disclosure. The first terminal 460 may correspond to the first terminal 350 of FIG. 3. Further, the first terminal 460 may be a positive terminal.

The first terminal 460 may be in direct contact with a current collector 410 that is electrically connected to the electrode assembly within the case of the secondary battery, so that the first terminal 460 can be electrically connected to the electrode assembly. For example, the first terminal 460 may include a terminal plate 462 and a set of protrusions 464. Here, the set of protrusions 464 may be secured by allowing the protrusions 464 to extend through a cap plate 430 and the current collector 410.

In some embodiments, the terminal plate 462 may be integrally formed with the set of protrusions 464. In such examples, the set of protrusions 464 may be formed to extend from the terminal plate 462. With such a configuration, material costs may be reduced by eliminating the need to separately provide terminals and fixing members for fixing the terminals.

The set of protrusions 464 may include two or more protrusions. The respective protrusions 464 may be formed along a long side of the terminal plate 462. By using a plurality of protrusions to fix the first terminal 460, the torque strength of the first terminal 460 is improved (e.g., increased) to prevent the first terminal 460 from bending during use of the secondary battery or substantially reduce bending thereof. The number of protrusions in the set of protrusions 464 may be determined based on a length of a long side of the cap plate 430 or a length of a long side of the terminal plate 462. The set of protrusions 464 may be formed such that the protrusions are arranged at intervals (e.g., regular intervals). However, the scope of the present disclosure is not limited thereto.

The length of the long side of the terminal plate 462 may be equal to or greater than half of a length of the long side of the cap plate 430. In some examples, a length of a short side of the terminal plate 462 may be equal to or greater than half of a length of a short side of the cap plate 430. This allows for improved (e.g., increased) heat dissipation of the secondary battery as well as reduced heat generation of the secondary battery. For example, the length of the long side of the cap plate 430 may be about 100 mm, and the length of the long side of the terminal plate 462 may be about 50 mm. Further, the length of the short side of the cap plate 430 may be about 30 mm, and the length of the short side of the terminal plate 462 may be about 15 mm.

The current collector 410, the terminal plate 462, and the set of protrusions 464 may be formed of the same or substantially the same material. In such examples, the same material may include aluminium (Al) or may be made of (e.g., be entirely made of) aluminium (Al).

An insulator 420 may be interposed between the cap plate 430 and the current collector 410. A gasket 440 may be interposed between the terminal plate 462 and the insulator 420 to seal a hollow portion of the cap plate 430 through which one of the protrusions 464 passes. Additionally, an upper insulator 450 may be provided between the terminal plate 462 and the cap plate 430.

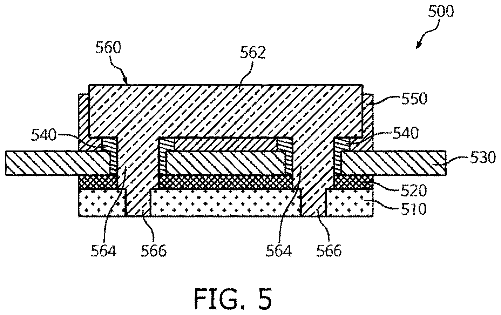

FIG. 5 is a cross-sectional view illustrating one side-surface 500 of a secondary battery at which a first terminal 560 has a two-stepped structure according to some embodiments of the present disclosure. The first terminal 560 may correspond to the first terminal 350 of FIG. 3. Further, the first terminal 560 may be a positive terminal.

Each of the protrusions in a set of protrusions in FIG. 5 may include a first sub-protrusion 564 and a second sub-protrusion 566. The first sub-protrusion 564 may have a first cross-sectional area and may be formed to extend from a terminal plate 562. The second sub-protrusion 566 may have a second cross-sectional area and may be formed to extend from the first sub-protrusion 564. In such examples, the first cross-sectional area may be greater than the second cross-sectional area. For example, the first sub-protrusion 564 may have a diameter of about 6.5 mm and the second sub-protrusion 566 may have a diameter of about 5 mm. The terminal plate 562 may be integrally formed with the first sub-protrusion 564 and the second sub-protrusion 566.

In some embodiments, the first sub-protrusion 564 may be formed to extend through a cap plate 530. Additionally, the second sub-protrusion 566 may be formed to extend through a current collector 510 that electrically connects an electrode tab with the first terminal 560.

An insulator 520 may be interposed between the cap plate 530 and the current collector 510, and the first sub-protrusion 564 may penetrate the insulator 520. A gasket 540 may be interposed between the terminal plate 562 and the insulator 520 to seal a hollow portion of the cap plate 530 through which the first sub-protrusion 564 passes. Additionally, an upper insulator 550 may be provided between the terminal plate 562 and the cap plate 530.

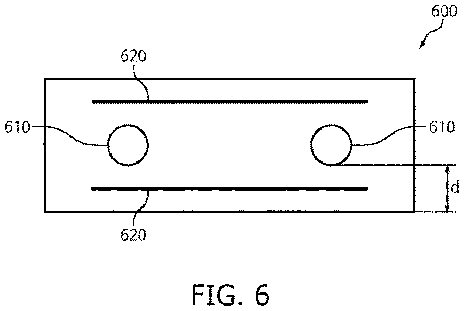

FIG. 6 is a cross-sectional view illustrating a current collector 600 according to some embodiments of the present disclosure. The current collector 600 may correspond to the current collector 510 of FIG. 5 and may electrically connect electrode tabs and terminals. The current collector 600 shown in FIG. 6 may represent a back surface of the current collector 600, that is, one surface of the current collector 600 facing the inside of the secondary battery.

A protrusion region 610 of the current collector 600 may indicate a region where a protrusion of the terminal plate (e.g., the second sub-protrusion 566 of FIG. 5) penetrates the current collector 600. A welding region 620 may indicate a region where the current collector 600 is welded to connect the current collector 600 to an internal structure of the secondary battery. As welding is performed in the weld region 620, a weld bead may be formed.

In order for the current collector 600 to be welded, it is desirable to obtain a reduced or minimum welding width for welding at the current collector 600. That is, a length in a width direction (e.g., a length in a short side) of the current collector 600 excluding a length of the protrusion region 610 in the width direction needs to be greater than or equal to a set or predetermined minimum welding width.

In some embodiments, an area of the protrusion region 610 (e.g., an area of the second sub-protrusion 566 in FIG. 5) may be determined such that the shortest distance d between a long side of the current collector 600 and the protrusion region 610 (e.g., the second sub-protrusion) is equal to or greater than the set or predetermined minimum welding width. With such a configuration, by adjusting only the cross-sectional area of the protrusion (e.g., the second sub-protrusion) that penetrates the current collector 600, the minimum or reduced welding width of the current collector 600 may be ensured while the degree of improvement (e.g., increase) in the torque strength of the terminal obtained by the protrusion (e.g., the first sub-protrusion 564 in FIG. 5) is maintained. In other words, by using the two-stepped protrusion having different diameters (e.g., the protrusion including the first sub-protrusion 564 and the second sub-protrusion 566 of FIG. 5), it is possible to increase or maximize the welding area of the current collector even in a thin cell.

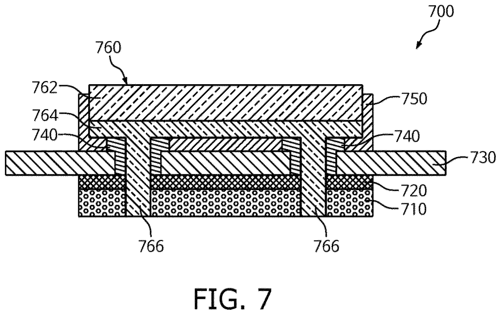

FIG. 7 is a cross-sectional view illustrating one side-surface 700 of a secondary battery at which a second terminal 760 is disposed according to some embodiments of the present disclosure. The second terminal 760 may correspond to the second terminal 360 of FIG. 3. Further, the second terminal 760 may be a negative terminal.

The second terminal 760 may be in direct contact with a current collector 710 electrically connected to the electrode assembly within the case of the secondary battery, so that the second terminal 760 can be electrically connected to the electrode assembly. For example, the second terminal 760 may include a first terminal plate 762, a second terminal plate 764 in surface contact with the first terminal plate 762, and a set of protrusions 766. Here, the set of protrusions 766 may be secured by allowing the protrusions 766 to extend through a cap plate 730 and the current collector 710.

In some embodiments, the second terminal plate 764 may be integrally formed with the set of protrusions 766. In such examples, the set of protrusions 766 may be formed to extend from the second terminal plate 764. With such a configuration, material costs may be reduced by eliminating the need to separately provide terminals and fixing members for fixing the terminals.

The set of protrusions 766 may include two or more protrusions. The respective protrusions 766 may be formed along a long side of the first terminal plate 762. By using a plurality of protrusions to fix the second terminal 760, the torque strength of the second terminal 760 is improved (e.g., increased), so that the second terminal 760 can be prevented from bending during use of the secondary battery or bending thereof may be substantially reduced. The number of protrusions in the set of protrusions 766 may be determined based on a length of a long side of the cap plate 730 or a length of a long side of each of the first and second terminal plates 762 and 764. The set of protrusions 766 may be formed such that the protrusions are arranged at intervals (e.g., regular intervals). However, the scope of the present disclosure is not limited thereto.

The length of the long side of the first terminal plate 762 and/or the length of the long side of the second terminal plate 764 may be equal to or greater than half of a length of the long side of the cap plate 730. In some examples, a length of a short side of the first terminal plate 762 and/or a length of a short side of the second terminal plate 764 may be equal to or greater than half of a length of a short side of the cap plate 730. This allows for improved (e.g., increased) heat dissipation of the secondary battery as well as reduced heat generation of the secondary battery.

The current collector 710, the second terminal plate 764, and the set of protrusions 766 may be formed of the same or substantially the same material. For example, the current collector 710, the second terminal plate 764, and the set of protrusions 766 may include copper (Cu) or be made of (e.g., be entirely made of) copper (Cu).

The first terminal plate 762 and the second terminal plate 764 may be formed of different materials. For example, the first terminal plate 762 may include aluminium or be made of (e.g., be entirely made of) aluminium.

In some embodiments, the first terminal plate 762 and the second terminal plate 764 may be joined together by using diffusion welding or cladding welding. This may reduce (e.g., minimize) deformation of the plates when the first terminal plate 762 and second terminal plate 764 are joined. Without being limited thereto, the first terminal plate 762 and the second terminal plate 764 may be joined to each other in various suitable ways.

An insulator 720 may be interposed between the cap plate 730 and the current collector 710. A gasket 740 may be interposed between the second terminal plate 764 and the insulator 720 to seal a hollow portion of the cap plate 730 through which one of the protrusions 766 passes. Additionally, an upper insulator 750 may be provided between the cap plate 730 and the first and second terminal plates 762 and 764.

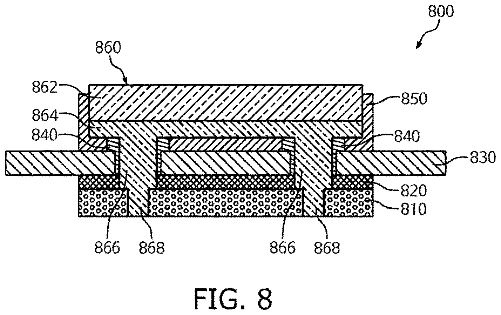

FIG. 8 is a cross-sectional view illustrating one side-surface 800 of a secondary battery at which a second terminal 860 having a two-stepped structure is disposed according to some embodiments of the present disclosure. Each of protrusions in a set of protrusions in FIG. 8 may include a first sub-protrusion 866 and a second sub-protrusion 868. The first sub-protrusion 866 may have a first cross-sectional area and may be formed to extend from a second terminal plate 864. The second sub-protrusion 868 may have a second cross-sectional area and may be formed to extend from the first sub-protrusion 866. In such examples, the first cross-sectional area may be greater than the second cross-sectional area. The second terminal plate 864 may be integrally formed with the first sub-protrusion 866 and the second sub-protrusion 868.

In some embodiments, the first sub-protrusion 866 may be formed to extend through a cap plate 830. Additionally, the second sub-protrusion 868 may be formed to extend through a current collector 810 that electrically connects an electrode tab with the second terminal 860.

An insulator 820 may be interposed between the cap plate 830 and the current collector 810, and the first sub-protrusion 866 may penetrate the insulator 820. A gasket 840 may be interposed between the second terminal plate 864 and the insulator 820 to seal a hollow portion of the cap plate 830 through which the first sub-protrusion 866 passes. Additionally, an upper insulator 850 may be interposed between the second terminal plate 864 and the cap plate 830.

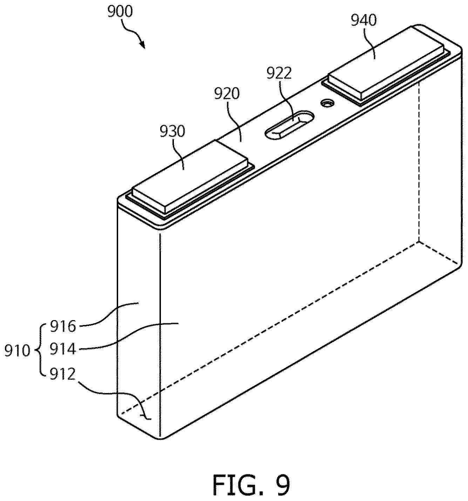

FIG. 9 is a perspective view of a secondary battery 900 having first and second terminals 930 and 940 that are formed at one surface thereof according to some embodiments of the present disclosure. The secondary battery 900 may include, but is not limited to, an electrode assembly, a case 910 accommodating the electrode assembly, a cap plate 920 coupled to the case 910, the first terminal 930, and the second terminal 940.

The case 910 may have a rectangular parallelepiped shape with an opened top surface and an accommodating space formed therein. The opened top surface of the case 910 allows the electrode assembly and an electrolyte solution to be received within the case 910. The case 910 may be composed of a rectangular bottom surface 912, and four side-surfaces connected to the bottom surface 912. Among the four side-surfaces, the side-surface with a relatively large area may be referred to as a long side wall portion 914 and the side-surface with a relatively small area may be referred to as a short side wall portion 916. For example, the electrode assembly accommodated within the case 910 may be arranged so that the plate surface faces the long side wall portion 914. With the electrode assembly accommodated in the case 910, the cap plate 920 may be coupled to the case 910 and electrically connected to the electrode assembly.

The cap plate 920 may have a rectangular shape and may be formed of the same or substantially the same material as the case 910. The cap plate 920 may be provided with the first terminal 930 and the second terminal 940 that penetrate the cap plate 920 and may be electrically and respectively connected to the first electrode tab and the second electrode tab of the electrode assembly. A vent unit 922 of the cap plate 920 serves to discharge gases by being opened upon an increase in the internal pressure of the secondary battery 900, and a general vent structure may be applied thereto.

It should be understood that the secondary battery 900 of FIG. 9 is not limited to those shown and described, and may further include the configurations described in FIGS. 1 and 3 as well as other configurations of the secondary battery.

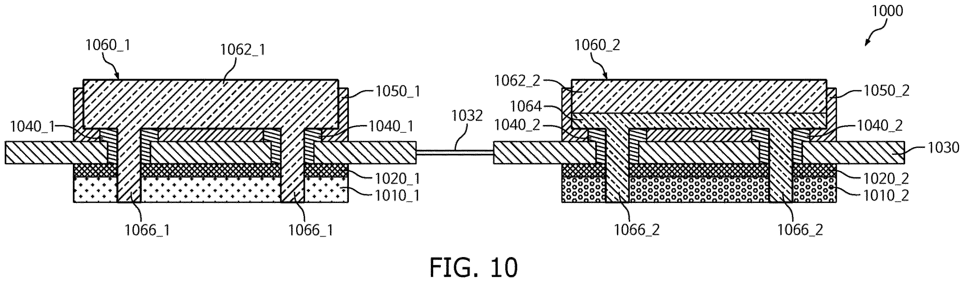

FIG. 10 is a cross-sectional view illustrating one surface 1000 of a secondary battery having a first terminal 1060_1 and a second terminal 1060_2 according to some embodiments of the present disclosure. The first terminal 1060_1 may correspond to the first terminal 930 of FIG. 9 and may be a positive terminal. The second terminal 1060_2 may correspond to the second terminal 940 of FIG. 9 and may be a negative terminal. A vent unit 1032 may correspond to the vent unit 922 of FIG. 9.

The first and second terminals 1060_1 and 1060_2 may be electrically connected to the electrode assembly by directly and respectively contacting the current collectors 1010_1 and 1010_2 that are electrically connected to the electrode assembly within a case of the secondary battery. For example, the first terminal 1060_1 may include a terminal plate 1062_1 and a first set of protrusions 1066_1, and the second terminal 1060_2 may include a first terminal plate 1062_2, a second terminal plate 1064 in surface contact with the first terminal plate 1062_2, and a second set of protrusions 1066_2. Here, the sets of protrusions 1066_1 and 1066_2 may be secured by allowing the protrusions 1066_1 and 1066_2 to extend through the cap plate 1030 and the current collectors 1010_1 and 1010_2.

In some embodiments, the terminal plate 1062_1 and the set of protrusions 1066_1 of the first terminal 1060_1 may be integrally formed. In such examples, the set of protrusions 1066_1 may be formed to extend from the terminal plate 1062_1. Further, the second terminal plate 1064 and the set of protrusions 1066_2 may be integrally formed. In such examples, the set of protrusions 1066_2 may be formed to extend from the second terminal plate 1064. With such a configuration, material costs may be reduced by eliminating the need to separately provide terminals and fixing members for fixing the terminals.

Each of the set of protrusions 1066_1 and the set of protrusions 1066_2 may include two or more protrusions. The respective protrusions 1066_1 may be formed along a long side of the terminal plate 1062_1, and the respective protrusions 1066_2 may be formed along a long side of the second terminal plate 1064. By using a plurality of protrusions to fix the first and second terminals 1060_1 and 1060_2, the torque strength of the first and second terminals 1060_1 and 1060_2 is improved (e.g., increased), so that the first and second terminals 1060_1 and 1060_2 can be prevented from bending during use of the secondary battery or bending thereof may be substantially reduced. The number of protrusions in the set of protrusions 1066_1 and the set of protrusions 1066_2 may be determined based on a length of a long side of the cap plate 1030 or lengths of the long sides of the terminal plate 1062_1 and the second terminal plate 1064. The set of protrusions 1066_1 and the set of protrusions 1066_2 may be formed such that the protrusions of each set are arranged at intervals (e.g., regular intervals). However, the scope of the present disclosure is not limited thereto.

The long side of the terminal plate 1062_1 of the first terminal 1060_1 may have the length that is equal to or greater than one-quarter of the length of the long side of the cap plate 1030. In some examples, a length of the short side of the terminal plate 1062_1 may be equal to or greater than half of a length of the short side of the cap plate 1030. Similarly, a length of a long side of the first terminal plate 1062_2 and/or the length of the long side of the second terminal plate 1064 of the second terminal 1060_2 may be equal to or greater than one-quarter of the length of the long side of the cap plate 1030. In some examples, a length of a short side of the first terminal plate 1062_2 and/or a length of a short side of the second terminal plate 1064 may be equal to or greater than half of the length of the short side of the cap plate 1030. This allows for improved (e.g., increased) heat dissipation of the secondary battery as well as reduced heat generation of the secondary battery.

The first current collector 1010_1, the terminal plate 1062_1, and the first set of protrusions 1066_1 associated with the first terminal 1060_1 may be formed of the same or substantially the same material. In such examples, the same material may include aluminium (Al) or be made of (e.g., be entirely made of) aluminium (Al).

The second current collector 1010_2, the second terminal plate 1064, and the second set of protrusions 1066_2 associated with the second terminal 1060_2 may be formed of the same or substantially the same material. For example, the second current collector 1010_2, the second terminal plate 1064, and the second set of protrusions 1066_2 may include copper (Cu) or be made of (e.g., be entirely made of) copper (Cu).

The first terminal plate 1062_2 and the second terminal plate 1064 of the second terminal 1060_2 may be formed of different materials. For example, the first terminal plate 1062_2 may include aluminium or be made of (e.g., be entirely made of) aluminium.

In some embodiments, the first terminal plate 1062_2 and the second terminal plate 1064 may be joined together by diffusion welding or cladding welding. This may reduce (e.g., minimize) deformation of the plates when the first terminal plate 1062_2 and second terminal plate 1064 are joined. Without being limited thereto, the first terminal plate 1062_2 and the second terminal plate 1064 may be joined to each other in various suitable ways.

An insulator 1020_1 may be interposed between the cap plate 1030 and the current collector 1010_1, and an insulator 1020_2 may be interposed between the cap plate 1030 and the current collector 1010_2. A gasket 1040_1 is provided between the terminal plate 1062_1 and the insulator 1020_1 to seal a hollow portion of the cap plate 1030 through which one of the set of protrusions 1066_1 passes. A gasket 1040_2 is interposed between the terminal plate 1064 and the insulator 1020_2 to seal a hollow portion of the cap plate 1030 through which one of the set of protrusions 1066_2 passes. Further, an upper insulator 1050_1 may be provided between the terminal plate 1062_1 and the cap plate 1030, and an upper insulator 1050_2 may be provided between the terminal plate 1064 and the cap plate 1030.

In some embodiments, each of the protrusions in the set of protrusions 1066_1 and the set of protrusions 1066_2 of FIG. 10 may include a first sub-protrusion and a second sub-protrusion. The first sub-protrusion may have a first cross-sectional area and may be formed to extend from each of the terminal plates 1062_1 and 1064. The second sub-protrusion may have a second cross-sectional area and may be formed to extend from the first sub-protrusion. In such examples, the first cross-sectional area may be greater than the second cross-sectional area. The terminal plate 1062_1, the first sub-protrusion, and the second sub-protrusion may be integrally formed, and the terminal plate 1064, the first sub-protrusion, and the second sub-protrusion may also be integrally formed. The first sub-protrusion may be formed to extend through the cap plate 1030. Further, the first sub-protrusion may be formed to extend through each of the insulators 1020_1 and 1020_2 respectively interposed between the cap plate 1030 and the current collector 1010_1 and between the cap plate 1030 and the current collector 1010_2. The second sub-protrusion may be formed to extend through each of the current collectors 1010_1 and 1010_2 that electrically and respectively connect the electrode tabs and the terminals 1060_1 and 1060_2.

Although the present disclosure has been described with reference to embodiments and drawings illustrating aspects thereof, the present disclosure is not limited thereto. Various suitable modifications and variations can be made by a person skilled in the art to which the present disclosure belongs within the scope of the present disclosure, as defined by the following claims and their equivalents.

## Claims

1. A secondary battery (300) comprising:
an electrode assembly (310);
a case (320) comprising a first surface that is opened, the case (320) being configured to accommodate the electrode assembly (310);
a first cap plate (342) covering the first surface;
a first terminal (350) electrically connected to a first electrode tab of the electrode assembly (310) and configured to penetrate the first cap plate (342), the first terminal (350) comprising a first terminal plate (352) and a first set of protrusions (354) that are integrally formed; and
a second terminal (360) electrically connected with a second electrode tab of the electrode assembly (310).

2. The secondary battery (300) as claimed in claim 1, further comprising:
a first current collector (392) electrically connecting the first electrode tab with the first terminal (350),
wherein the first set of protrusions (354) is secured by allowing the first set of protrusions (354) to penetrate the first cap plate (342) and the first current collector (392).

3. The secondary battery (300) as claimed in claim 2, wherein the first current collector (392), the first terminal plate (352), and the first set of protrusions (354) are formed of a same material, and
wherein the same material is aluminium.

4. The secondary battery (300) as claimed in any one of claims 1 to 3, wherein the first set of protrusions (354) is formed to extend from the first terminal plate (352).

5. The secondary battery (300) as claimed in any one of claims 1 to 4, wherein the protrusions of the first set of protrusions (354) are formed along a long side of the first terminal plate (352).

6. The secondary battery (300) as claimed in any one of claims 1 to 5, wherein the case (32)0 comprises a second surface that is opened and is opposite to the first surface,
wherein the secondary battery (300) further comprises a second cap plate (344) covering the second surface,
wherein the second terminal (360) penetrates the second cap plate (344),
wherein a length of a long side of the first terminal plate (352) is equal to or greater than half of a length of a long side of the first cap plate (342), and
wherein a length of a short side of the first terminal plate (352) is equal to or greater than half of a length of a short side of the first cap plate (342).

7. The secondary battery (300) as claimed in claim 1, wherein each protrusion of the first set of protrusions (354) comprises:
a first sub-protrusion (564) having a first cross-sectional area and formed to extend from the first terminal plate (352); and
a second sub-protrusion (566) having a second cross-sectional area and formed to extend from the first sub-protrusion (564), and
wherein the first cross-sectional area is greater than the second cross-sectional area.

8. The secondary battery (300) as claimed in claim 7, further comprising:
a first current collector (392) electrically connecting the first electrode tab with the first terminal (350),
wherein the first sub-protrusion (564) penetrates the first cap plate (342), and the second sub-protrusion (566) penetrates the first current collector (392).

9. The secondary battery (300) as claimed in claim 7, further comprising:
a first current collector (392) electrically connecting the first electrode tab with the first terminal (350),
wherein the second cross-sectional area is defined such that a shortest distance between a long side of the first current collector (392) and the second sub-protrusion (566) is equal to or greater than a minimum welding width.

10. The secondary battery (300) as claimed in claim 7, further comprising:
a first current collector (392) electrically connecting the first electrode tab with the first terminal (350),
wherein an insulator (420) is between the first cap plate (342) and the first current collector (392), and the first sub-protrusion (564) penetrates the insulator (420).

11. The secondary battery (300) as claimed in claim 1, wherein the case (320) comprises a second surface that is opened and is opposite to the first surface, wherein the secondary battery (300) further comprises:
a second cap plate (344) covering the second surface; and
a second current collector (394) electrically connecting the second electrode tab with the second terminal (360),
wherein the second terminal (360) penetrates the second cap plate (344),
wherein the second terminal (360) comprises a second terminal plate (762), a third terminal plate (764) in surface contact with the second terminal plate (762), and a second set of protrusions (364),
wherein the third terminal plate (764) and the second set of protrusions (364) are integrally formed, and
wherein the second set of protrusions (364) is secured by allowing the second set of protrusions (364) penetrate the second cap plate (344) and the second current collector (394).

12. The secondary battery (300) as claimed in claim 11, wherein the second terminal plate (762) and the third terminal plate (764) are formed of different materials,
wherein the third terminal plate (764) and the second set of protrusions (364) are formed of a same material,
wherein the second set of protrusions (364) and the second current collector (394) are formed of a same material,

13. The secondary battery as claimed in claim 12, wherein the second terminal plate (762) is formed of aluminium, and
wherein the third terminal plate (764), the second set of protrusions (364), and the second current collector (394) are formed of copper.

14. The secondary battery 300 as claimed in any one of claims 11 to 13, wherein the second terminal plate (762) and the third terminal plate (764) are joined together by diffusion welding or cladding welding.

15. The secondary battery (300) as claimed in any one of claims 1 to 14, wherein the case (320) further comprises:
a first long side wall portion and a second long side wall portion that are opposite to each other and are spaced apart from each other; and
a first short side wall portion and a second short side wall portion that are opposite to each other and are spaced apart from each other, an area of each of the first short side wall portion and the second short side wall portion being smaller than an area of each of the first long side wall portion and the second long side wall portion.

## Amended claims

### Amended claims in accordance with Rule 137(2) EPC.

1. A secondary battery (300) comprising:
an electrode assembly (310);
a case (320) comprising a first surface that is opened, the case (320) being configured to accommodate the electrode assembly (310);
a first cap plate (342) covering the first surface;
a first terminal (350) electrically connected to a first electrode tab of the electrode assembly (310) via a first current collector (392) and configured to penetrate the first cap plate (342) and the first current collector (392), the first terminal (350) comprising a first terminal plate (352) and a first set of protrusions (354) that are integrally formed; and
a second terminal (360) electrically connected with a second electrode tab of the electrode assembly (310)
wherein each protrusion of the first set of protrusions (354) comprises:
a first sub-protrusion (564) having a first cross-sectional area and formed to extend from the first terminal plate (352);
a second sub-protrusion (566) having a second cross-sectional area and formed to extend from the first sub-protrusion (564);
wherein the first cross-sectional area is greater than the second cross-sectional area, and
wherein the first sub-protrusion (564) penetrates the first cap plate (342), and the second sub-protrusion (566) penetrates the first current collector (392).

2. The secondary battery (300) as claimed in claim 1, wherein the first current collector (392), the first terminal plate (352), and the first set of protrusions (354) are formed of a same material, and
wherein the same material is aluminium.

3. The secondary battery (300) as claimed in any one of claims 1 or 2,
wherein the protrusions of the first set of protrusions (354) are formed along a long side of the first terminal plate (352).

4. The secondary battery (300) as claimed in any one of claims 1 to 3,
wherein the case (32) comprises a second surface that is opened and is opposite to the first surface,
wherein the secondary battery (300) further comprises a second cap plate (344) covering the second surface,
wherein the second terminal (360) penetrates the second cap plate (344),
wherein a length of a long side of the first terminal plate (352) is equal to or greater than half of a length of a long side of the first cap plate (342), and
wherein a length of a short side of the first terminal plate (352) is equal to or greater than half of a length of a short side of the first cap plate (342).

5. The secondary battery (300) as claimed in any one of claims 1 to 4,
wherein the first current collector (392) is welded to connect the first current collector (392) to an internal structure of the secondary battery (300), and
wherein the second cross-sectional area is defined such that a shortest distance between a long side of the first current collector (392) and the second sub-protrusion (566) is equal to or greater than a minimum welding width.

6. The secondary battery (300) as claimed in any one of claims 1 to 4,
wherein an insulator (420) is between the first cap plate (342) and the first current collector (392), and the first sub-protrusion (564) penetrates the insulator (420).

7. The secondary battery (300) as claimed in claim 1, wherein the case (320) comprises a second surface that is opened and is opposite to the first surface,
wherein the secondary battery (300) further comprises:
a second cap plate (344) covering the second surface; and
a second current collector (394) electrically connecting the second electrode tab with the second terminal (360),
wherein the second terminal (360) penetrates the second cap plate (344), wherein the second terminal (360) comprises a second terminal plate (762), a third terminal plate (764) in surface contact with the second terminal plate (762), and a second set of protrusions (364),
wherein the third terminal plate (764) and the second set of protrusions (364) are integrally formed, and
wherein the second set of protrusions (364) is secured by allowing the second set of protrusions (364) penetrate the second cap plate (344) and the second current collector (394).

8. The secondary battery (300) as claimed in claim 7, wherein the second terminal plate (762) and the third terminal plate (764) are formed of different materials,
wherein the third terminal plate (764) and the second set of protrusions (364) are formed of a same material,
wherein the second set of protrusions (364) and the second current collector (394) are formed of a same material,

9. The secondary battery as claimed in claim 8, wherein the second terminal plate (762) is formed of aluminium, and
wherein the third terminal plate (764), the second set of protrusions (364), and the second current collector (394) are formed of copper.

10. The secondary battery 300 as claimed in any one of claims 7 to 9,
wherein the second terminal plate (762) and the third terminal plate (764) are joined together by diffusion welding or cladding welding.

11. The secondary battery (300) as claimed in any one of claims 1 to 10,
wherein the case (320) further comprises:
a first long side wall portion and a second long side wall portion that are opposite to each other and are spaced apart from each other; and
a first short side wall portion and a second short side wall portion that are opposite to each other and are spaced apart from each other, an area of each of the first short side wall portion and the second short side wall portion being smaller than an area of each of the first long side wall portion and the second long side wall portion.
